# EUROPEAN PATENT APPLICATION

(11) **EP 1 696 305 A1**
(43) Date of publication of application: **30.08.2006**
(21) Application number: 06251014.4
(22) Date of filing: 24.02.2006
(51) Int. Cl.: G06F 1/32

(54) **Information processing device and information processing method**

(30) Priority: 25.02.2005 JP 2005050658
(71) Applicant: SONY CORPORATION, Tokyo 141 (JP)
(72) Inventor: Matsumoto, Kissei, Sony Corporation, Tokyo 141 (JP)
(74) Representative: Turner, James Arthur

(57) **Abstract**

An information processing device includes a recording/playback unit which performs one of data recording in a recording medium and data playback from the recording medium, a communication unit which performs communication with a different information processing device, and a control unit in which, when the recording/playback unit performs the data playback, the control unit allows supplying power to the recording/playback unit and disallows supplying the power to the communication unit, and in which, when the communication unit performs the communication, the control unit allows supplying the power to the communication unit and disallows supplying the power to the recording/playback unit.

## Description

This invention relates to information processing devices, methods and programs.

In recent years, many music distribution services using cellular phones have been provided. Accordingly, the number of users has increased who listen to received music by using cellular phones having audio functions for playing back and recording music. In addition, a portable terminal has been proposed in which, by providing a communication function, such as a cellular phone function, to a portable terminal (such as so-called a "Walkman® ") of the related art specialized for an audio function, telephone calling can be performed and a music distribution service can be received.

Although this portable terminal has convenient functions (e.g., a function capable of receiving or sending electronic mail (e-mail) as well as playing back music) which are not realized by the portable terminal of the related art specialized for an audio function, a problem ignored in an audio player of the related art occurs.

For example, when a portable terminal includes a hard disk drive (HDD) having an audio function and a communication unit having a calling function, both the HDD and the communication unit simultaneously operate, the peak value of power consumption of the portable terminal greatly increases because each of the HDD and the communication unit needs a large amount of power (e.g., 1 W or greater).

In addition, an information processing device (see, for example, Japanese Unexamined Patent Application Publication No. 2004-206530) has been proposed in which, when no recording medium is loaded in a drive, by stopping supplying power to the drive so that standby power necessary for the drive is set to zero, power consumption is reduced.

In the above portable terminal having an audio function and a communication function, however, reduction of power consumption has not been proposed. In other words, this portable terminal does not satisfy a user's demand, for example, the need to increase the life of a charging battery, that is, the need to extend the operating time per charge of the portable terminal.

Various respective aspects and features of the invention are defined in the appended claims. Features from the dependent claims may be combined with features of the independent claims as appropriate and not merely as explicitly set out in the claims.

Embodiments of the present invention relate to information processing devices, information processing methods, and programs used therewith, and, in particular, to an information processing device and method which reduce power consumption in an apparatus having a data communication function and a data recording or playback function, and to a program used therewith.

Accordingly, in an embodiment of the present invention, it is desirable to reduce power consumption in an apparatus having a data communication function and a data recording or playback function.

According to an embodiment of the present invention, there is provided a first information processing device including recording/playback means which records data in a recording medium or plays back data from the recording medium, communication means which performs communication with a different information processing device, and control means in which, when the recording/playback means performs the data playback, the control means allows supplying power to the recording/playback means and disallows supplying the power to the communication means, and in which, when the communication means performs the communication, the control means allows supplying the power to the communication means and disallows supplying the power to the recording/playback means.

The communication means may receive data from the different information processing device, and, when the recording/playback means records the data received by the communication means in the recording medium, the control means may allow supplying the power to the recording/playback means and may disallow supplying the power to the communication means.

The information processing device may further include a plurality of power supply means which perform power supplying. One of the plurality of power supply means may supply the power to the recording/playback means and the communication means.

The information processing device may further include storage means which stores one of the data played back from the recording medium by the recording/playback means and the data that is recorded in the recording medium by the recording/playback means.

While the data is being output from the storage means, when the amount of data stored in the storage means is equal to or less than a predetermined amount of data, the control means may allow supplying the power to the recording/playback means and may disallow supplying the power to the communication means.

While the data is being output from the storage means, when the amount of data stored in the storage means is equal to or greater than a predetermined amount of data, the control means may allow supplying the power to the communication means and may disallow supplying the power to the recording/playback means.

While the data is being output from the storage means, when the amount of data stored in the storage means is equal to or less than a first amount of data, the control means may allow supplying the power to the recording/playback means and may disallow supplying the power to the communication means, and, when the amount of data stored in the storage means is equal to or greater than a second amount of data, the control means may allow supplying the power to the communication means and may disallow supplying the power to the recording/playback means.

The information processing device may further include communication control means in which, when the control means disallows supplying the power to the communication means, the communication control means stores an interruption position at which data communication is interrupted, and, when the control means allows supplying the power to the communication means, the communication control means restarts data communication at the interruption position.

According to another embodiment of the present invention, there is provided a second information processing device including recording/playback means which records data in a recording medium or plays back data from the recording medium, storage means which stores one of the data played back from the recording medium by the recording/playback means and the data that is recorded in the recording medium by the recording/playback means, communication means which performs communication with a different information processing device, and control means in which, in the case of recording data received by the communication means in the recording medium via the storage means, when the storage means has less free space, the control means allows supplying the power to the recording/playback means and disallows supplying the power to the communication means, and, when the amount of the data stored in the storage means decreases, the control means allows supplying the power to the communication means and disallows supplying the power to the recording/playback means.

According to another embodiment of the present invention, there is provided a first information processing method for an information processing device including recording/playback means which performs recording or playing back data in a recording medium, and communication means which performs communication, the information processing method including the steps of, commanding the recording/playback means to perform data playback, allowing supplying power to the recording/playback means and disallowing supplying the power to the communication means, commanding the communication means to perform data communication, and allowing supplying the power to the communication means and disallowing supplying the power to the recording/playback means.

According to another embodiment of the present invention, there is provided a second information processing method for an information processing device including recording/playback means which performs one of recording data in a recording medium and playing back data from the recording medium, storage means which stores one of the data played back from the recording medium by the recording/playback means and the data that is recorded in the recording medium, and communication means which performs communication, the information processing method including the steps of, by the communication means, receiving data, storing the data received by the communication means in the storage means, when the storage means has less free space, allowing supplying power to the recording/playback means and disallowing the power to the communication means, and, when the amount of the received data stored in the storage means decreases, allowing supplying the power to the communication means and disallowing supplying the power to the recording/playback means.

According to embodiments of the first information processing device and the first information processing method, when recording/playback means performs data playback, supplying power to recording/playback means is allowed and supplying the power to communication means is disallowed, and, when the communication means performs communication, supplying the power to the communication means is allowed and supplying the power to the recording/playback means is disallowed.

According to embodiments of the second information processing device and the second information processing method, while the data stored in the storage mean is being output, when the amount of data stored in the storage means is equal to or less than a first amount of data, supplying the power to recording/playback means is allowed and supplying the power to communication means is disallowed, and, when the amount of data stored in the storage means is equal to or greater than a second amount of data, supplying the power to the communication means is allowed and supplying the power to the recording/playback means is disallowed.

According to an embodiment of the present invention, in an apparatus having a data communication function and a data recording or playback function, power consumption can be reduced.

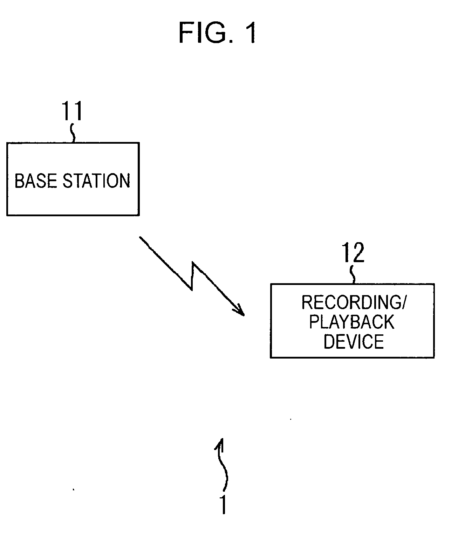

The invention will now be described by way of example with reference to the accompanying drawings, throughout which like parts are referred to by like references, and in which: Fig. 1 is a block diagram showing an example of the configuration of a communication system to which an embodiment of the present invention is applied;
Fig. 2 is a block diagram showing an example of the configuration of a first embodiment of the recording/playback device shown in Fig. 1;
Fig. 3 is a detailed block diagram showing an example of the configuration of the communication unit shown in Fig. 2;
Fig. 4 is a detailed block diagram showing the configuration of the recording/playback unit shown in Fig. 2;
Fig. 5 is a timing chart illustrating control, by the recording/playback unit shown in Fig. 4, of supplying power to the communication unit and HDD shown in Fig. 2;
Fig. 6 is a timing chart illustrating control, by the recording/playback unit shown in Fig. 4, of supplying power to the communication unit and HDD shown in Fig. 2;
Fig. 7 is a timing chart illustrating control, by the recording/playback unit shown in Fig. 4, of supplying power to the communication unit and HDD shown in Fig. 2;
Fig. 8 is a flowchart illustrating a power control process in a playback mode by a CPU;
Fig. 9 is a flowchart illustrating a buffer RAM process that writing or reading music data in a buffer RAM;
Fig. 10 is a flowchart illustrating an e-mail sending/receiving process that sends or receives e-mail;
Fig. 11 is a flowchart illustrating a power control process in a recording mode by a CPU;
Fig. 12 is a flowchart illustrating a music data downloading process by the communication unit shown in Fig. 2;
Fig. 13 is a block diagram showing an example of the configuration of a second embodiment of the recording/playback device shown in Fig. 1; and
Fig. 14 is a block diagram showing an example of the configuration of an embodiment of a computer to which an embodiment of the present invention is applied.

Before describing an embodiment of the present invention, the correspondence between the features of the claims and the specific elements disclosed in embodiments of the present invention is discussed below. This description is intended to assure the embodiments supporting the claimed invention are described in this specification. Thus, even if an element in the following embodiments is not described as relating to a certain feature of the present invention, that does not necessarily mean that the element does not relate to that feature of the claims. Conversely, even if an element is described herein as relating to a certain feature of the claims, that does not necessarily mean that the element does not relate to other features of the claims.

Furthermore, this description should not be construed as restricting that all the aspects of the invention disclosed in the embodiments are described in the claims. That is, the description does not deny the existence of aspects of the present invention that are described in the embodiments but not claimed in the invention of this application, i.e., the existence of aspects of the present invention that in future may be claimed by a divisional application, or that may be additionally claimed through amendments.

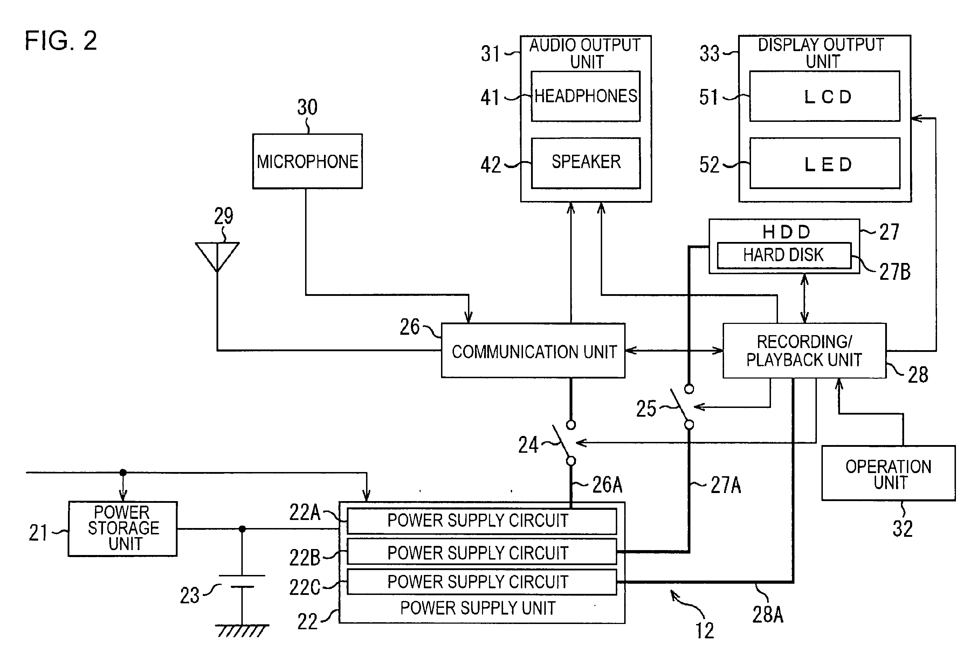

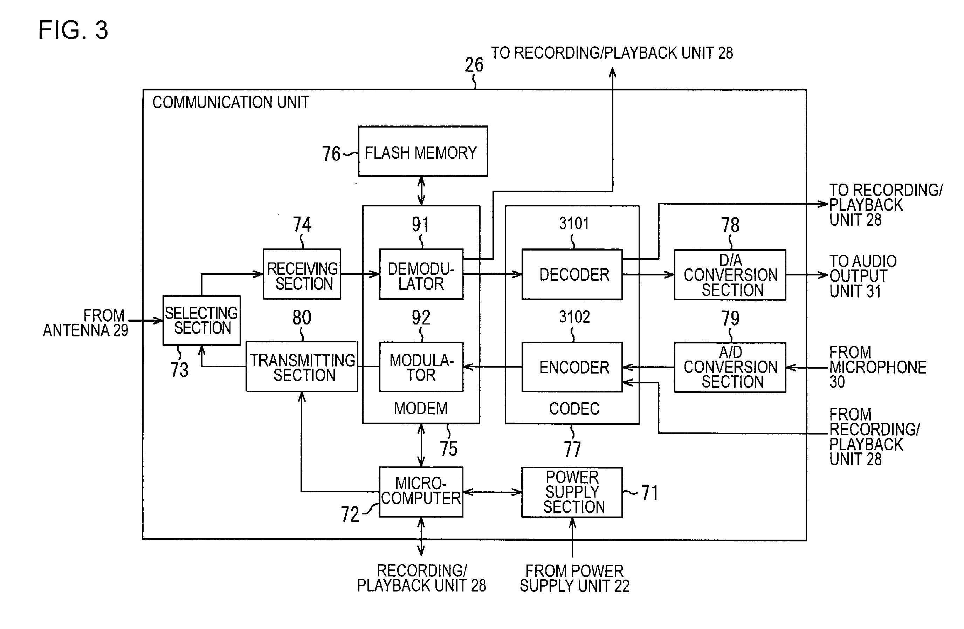

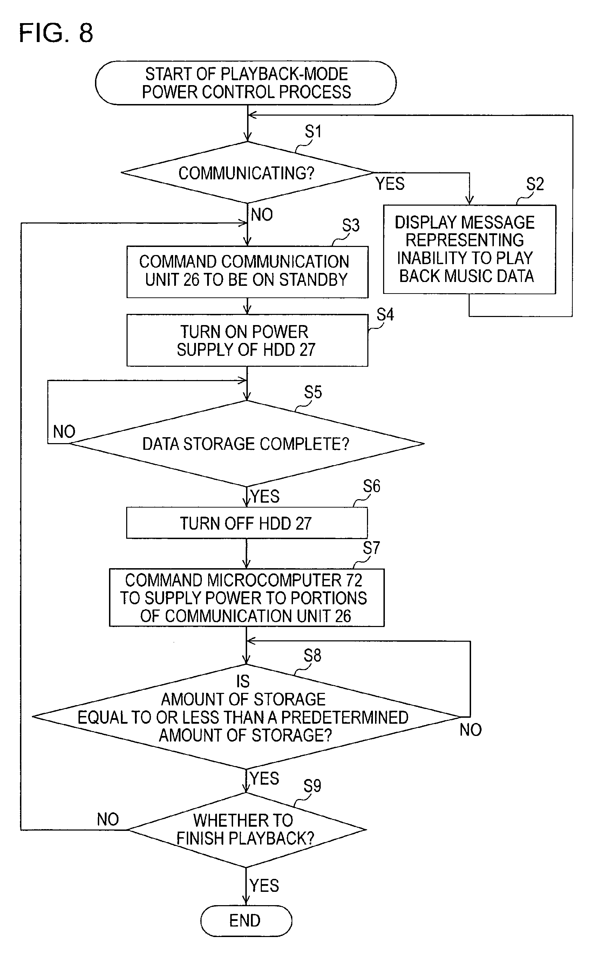

An information processing device (e.g., the recording/playback device 12 in Fig. 1) according to an embodiment of the present invention includes recording/playback means (e.g., the HDD 27 in Fig. 2) which records data (e.g., music data) in a recording medium (e.g., the hard disk 27B in Fig. 2) and plays back data from the recording medium, communication means (e.g., the selecting unit 73 in Fig. 3) which performs communication with a different information processing device, and control means (e.g., the recording/playback unit 28 in Fig. 2) in which, when the recording/playback means performs the data playback, the control means allows supplying power to the recording/playback means (e.g., step S4 in Fig. 8) and disallows supplying the power to the communication means (e.g., step S3 in Fig. 8), and in which, when the communication means performs the communication, the control means allows supplying the power to the communication means (e.g., step S7 in Fig. 8) and disallows supplying the power to the recording/playback means (e.g., step S6 in Fig. 8).

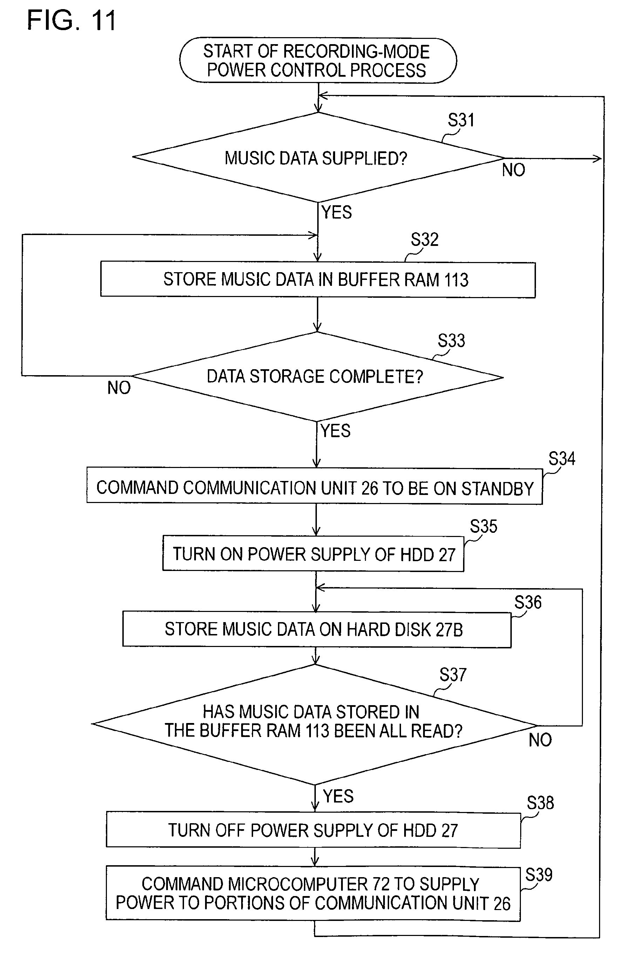

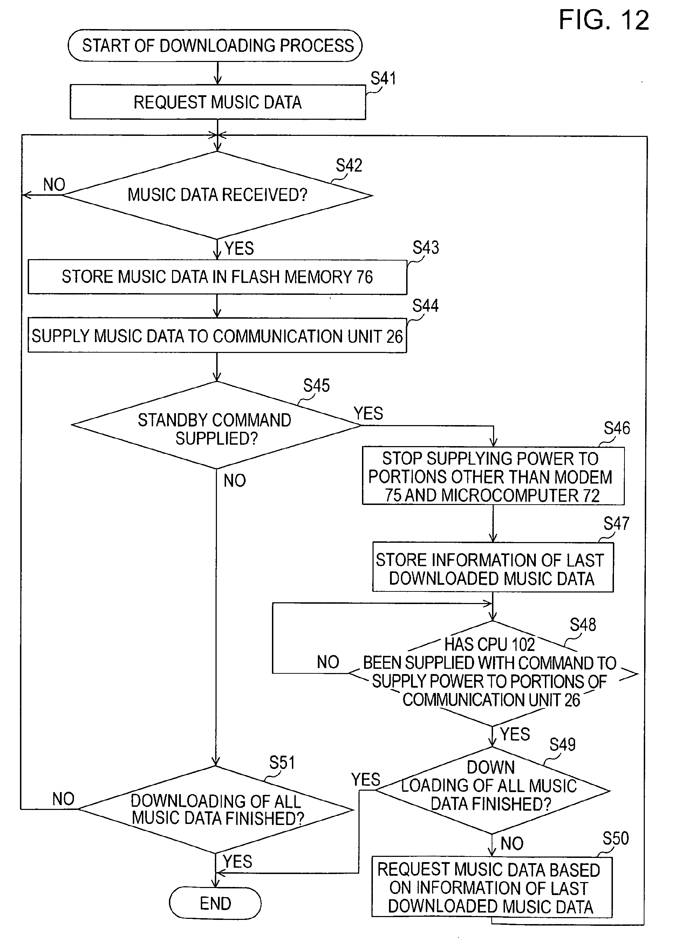

In an information processing device according to another embodiment of the present invention, the communication means may receive data from the different information processing device (e.g., step S42 in Fig. 12), and, when the recording/playback means records the data received by the communication means in the recording medium, the control means may allow supplying the power to the recording/playback means (e.g., step S35 in Fig. 11) and may disallow supplying the power to the communication means (e.g., step S34 in Fig. 11).

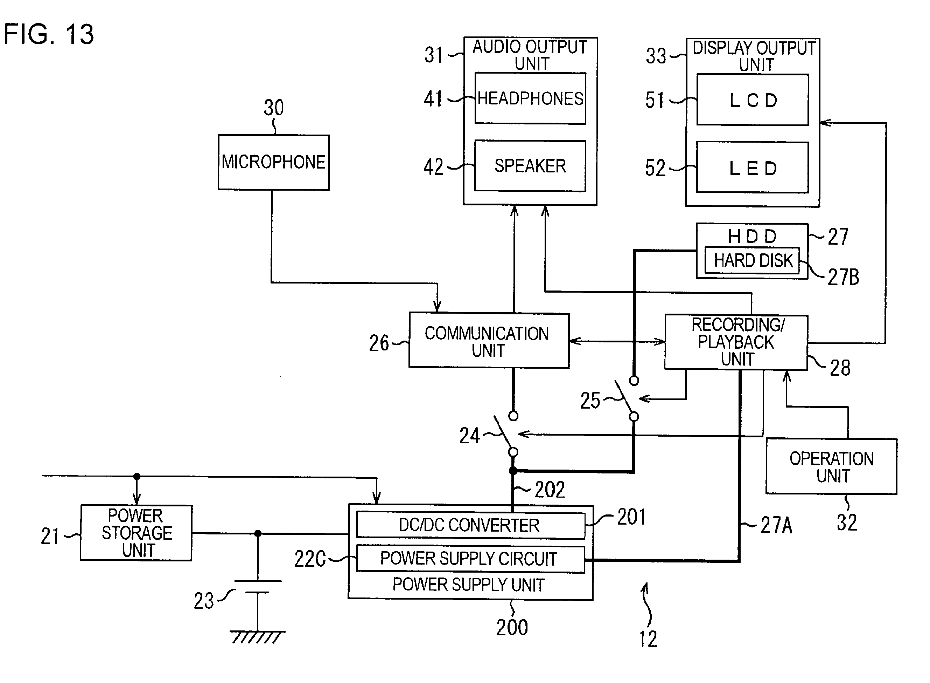

An information processing device according to another embodiment of the present invention may further include a plurality of power supply means (e.g., the DC/DC converter 201 and power supply circuit 22C in Fig. 13) which performs power supplying. One (e.g., the DC/DC converter 201 in Fig. 13) of the plurality of power supply means may supply the power to the recording/playback means and the communication means.

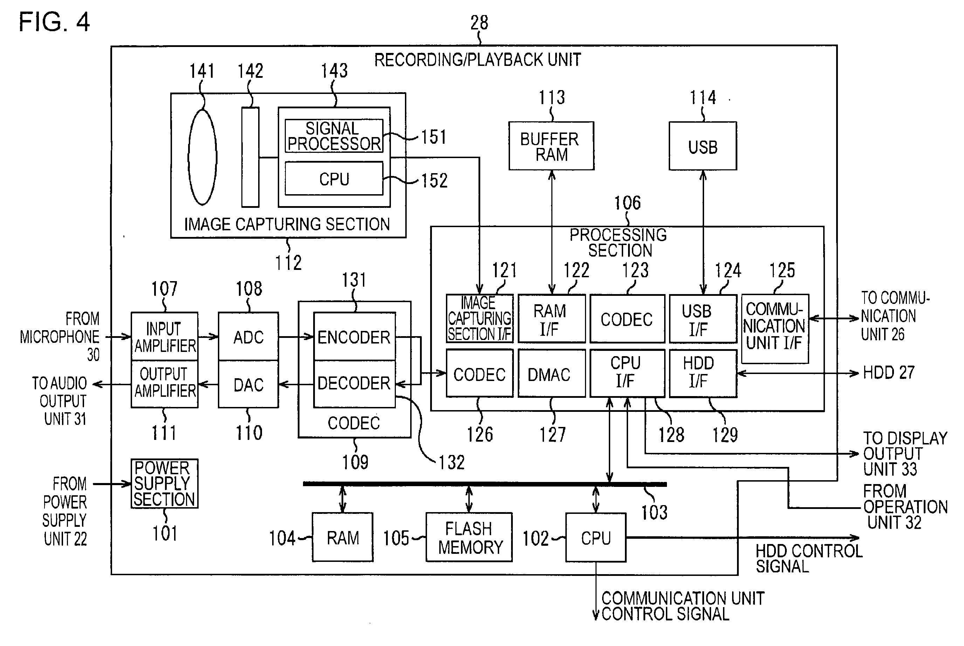

An information processing device according to another embodiment of the present invention may further include storage means (e.g., the buffer RAM 113 in Fig. 4) which stores one of data played back from the recording medium by the recording/playback means and data to be recorded in the recording medium.

In an information processing device according to another embodiment of the present, while the data is being output from the storage means, when the amount of data stored in the storage means is equal to or less than a predetermined amount of data, the control means may allow supplying the power to the recording/playback means (e.g., step S35 in Fig. 11) and may disallow supplying the power to the communication means (e.g., step S34 in Fig. 11).

In an information processing device according to another embodiment of the present, while the data is being output from the storage means, when the amount of data stored in the storage means is equal to or greater than a predetermined amount of data, the control means may allow supplying the power to the communication means (e.g., step S7 in Fig. 8) and may disallow supplying the power to the recording/playback means (e.g., step S6 in Fig. 8).

In an information processing device according to another embodiment of the present, while the data is being output from the storage means, when the amount of data stored in the storage means is equal to or less than a first amount of data, the control means may allow supplying the power to the recording/playback means (e.g., step S4 in Fig. 8) and may disallow supplying the power to the communication means (e.g., step S3 in Fig. 8), and, when the amount of data stored in the storage means is equal to or greater than a second amount of data, the control means may allow supplying the power to the communication means (e.g., step S7 in Fig. 8) and may disallow supplying the power to the recording/playback means (e.g., step S6 in Fig. 8).

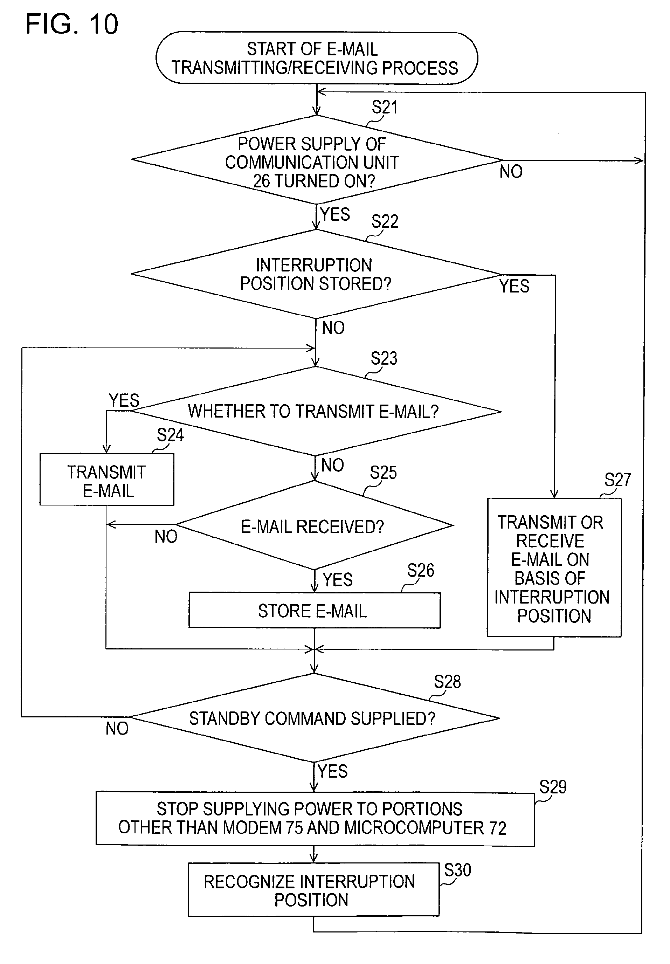

An information processing device according to another embodiment of the present invention may further include communication control means (e.g., the microcomputer 72 in Fig. 3) in which, when the control means disallows supplying the power to the communication means, the communication control means stores an interruption position (e.g., step S29 in Fig. 10) at which data communication is interrupted, and, when the control means allows supplying the power to the communication means, the communication control means restarts data communication at the interruption position (e.g., step S26 in Fig. 10).

An information processing device according to another embodiment of the present invention includes recording/playback means (e.g., the HDD 27 in Fig. 2) which records data in a recording medium and plays back data from the recording medium, storage means (e.g., the buffer RAM 113 in Fig. 4) which stores one of the data played back from the recording medium by the recording/playback means and the data that is recorded in the recording medium by the recording/playback means, communication means (e.g., the selecting unit 73 in Fig. 3) which performs communication with a different information processing device, and control means (e.g., the CPU 102 in Fig. 4) in which, in the case of recording data received by the communication means in the recording medium via the storage means, when the storage means has less free space, the control means allows supplying the power to the recording/playback means (e.g., step S4 in Fig. 8) and disallows supplying the power to the communication means (e.g., step S3 in Fig. 8), and, when the amount of the data stored in the storage means decreases, the control means allows supplying the power to the communication means (e.g., step S7 in Fig. 8) and disallows supplying the power to the recording/playback means (e.g., step S6 in Fig. 8).

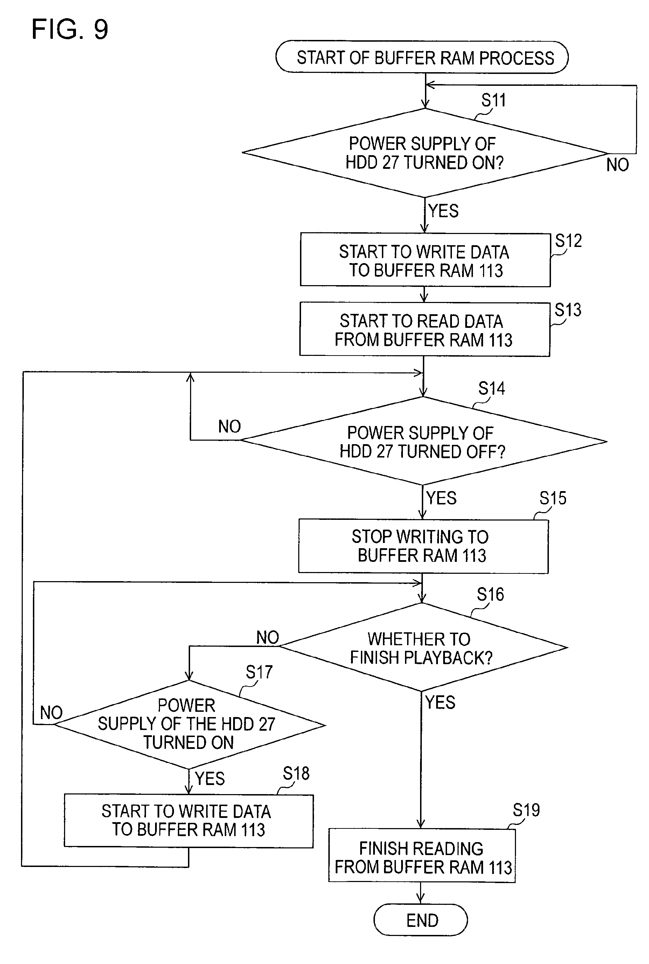

An information processing method, according to another embodiment the present invention, for an information processing device including recording/playback means (e.g., the HDD 27 in Fig. 2) which performs recording or playing back data in a recording medium (e.g., the HDD 27 in Fig. 2), and communication means (e.g., the selecting unit 73 in Fig. 3) which performs communication, includes the steps of, by the recording/playback means, commanding the recording/playback means to perform data playback (e.g., step S12 in Fig. 9), allowing supplying power to the recording/playback means (e.g., step S4 in Fig. 8) and disallowing supplying the power to the communication means (e.g., step 3 in Fig. 8), by the communication means, commanding data communication, and allowing supplying the power to the communication means (e.g., step S7 in Fig. 8) and disallowing supplying the power to the recording/playback means (e.g., step S6 in Fig. 8).

An information processing method, according to another embodiment of the present invention, for an information processing device (e.g., the recording/playback device 12 in Fig. 1) including recording/playback means (e.g., the HDD 27 in Fig. 2) which performs one of recording data in a recording medium (e.g., the hard disk 27B in Fig. 2) and playing back data from the recording medium, storage means (e.g., the buffer RAM 113 in Fig. 4) which stores one of the data played back from the recording medium by the recording/playback means and the data that is recorded in the recording medium, and communication means (e.g., the selecting unit 73 in Fig. 3) which performs communication, includes the steps of, by the communication means, receiving data, storing the data received by the recording medium in the storage means, when the storage means has less free space, allowing supplying power to the recording/playback means (e.g., step S4 in Fig. 8) and disallowing the power to the communication means (e.g., step S3 in Fig. 8), and, when the amount of the received data stored in the storage means decreases, allowing supplying the power to the communication means (e.g., step S7 in Fig. 8) and disallowing supplying the power to the recording/playback means (e.g., step S6 in Fig. 8).

Specific embodiments of the present invention are described below with reference to the accompanying drawings.

Fig. 1 shows an example of the configuration of a communication system 1 to which an embodiment of the present invention is applied.

The communication system 1 shown in Fig. 1 includes a cellular phone carrier base station 11 and a recording/playback device 12. The recording/playback device 12 performs e-mail transmission/reception, calling, or music data downloading through the base station 11. The recording/playback device 12 records and plays back downloaded music data.

Fig. 2 is a block diagram showing an example of the configuration of a first embodiment of the recording/playback device 12 shown in Fig. 1.

The recording/playback device 12 includes a power storage unit 21, a power supply unit 22, a battery 23, switches 24 and 25, a communication unit 26, a hard disk drive (HDD) 27, a recording/playback unit 28, an antenna 29, a microphone 30, an audio output unit 31, an operation unit 32, and a display output unit 33.

External DC power is supplied to charge the power storage unit 21. The power storage unit 21 supplies the power to the power supply unit 22. The power supply unit 22 includes power-supply circuits 22A to 22C. The power supply unit 22 is externally supplied with power from the exterior, the power storage unit 21, or the battery 23 such as a lithium-ion battery. The power supply circuit 22A of the power supply unit 22 connects to a power supply line 26A. The power supply circuit 22A supplies power to the communication unit 26 through the power supply line 26A and the switch 24.

The power supply circuit 22B of the power supply unit 22 connects to a power supply line 27A. The power supply circuit 22B supplies power to the HDD 27 through the power supply line 27A and the switch 25. The power supply circuit 22C of the power supply unit 22 connects to a power supply line 28A. The power supply circuit 22C supplies power to the recording/playback unit 28 through the power supply line 28A. The power supply circuit 22C of the power supply unit 22 supplies power not only to the recording/playback unit 28 but also to portions other than the communication unit 26 and the HDD 27, for example, through the power supply line 28A.

The switch 24 supplies the power to the communication unit 26 and stops supplying the power to the communication unit 26 on the basis of a communication unit control signal that controls supplying the power supplied from the recording/playback unit 28 to the communication unit 26. Similarly to the switch 24, the switch 25 stops supplying power supplied from the recording/playback unit 28 to the HDD 27 and stops supplying the power to the HDD 27 on the basis of an HDD control signal that controls supplying the HDD 27 with the power supplied from the recording/playback unit 28.

The antenna 29 is connected to the communication unit 26. The communication unit 26 uses the antenna 29 to receive radio waves from the base station 11 (Fig. 1) and to transmit radio waves to the base station 11. The communication unit 26 also connects to the recording/playback unit 28, the microphone 30, and the power storage unit 21. The communication unit 26 performs calling by transmitting radio waves corresponding to (a signal of) sound supplied from the microphone 30, and supplying the audio output unit 31 with (a signal of) sound corresponding to radio waves received through the antenna 29.

In addition, the communication unit 26 downloads music data through the antenna 29 and supplies the music data to the recording/playback unit 28. The communication unit 26 transmits and receives (data of) e-mail through the antenna 29. When being supplied with a standby command from the recording/playback unit 28, the communication unit 26 sets its operating mode to a standby mode (power saving mode) in which power consumption is reduced. The communication unit 26 supplies the recording/playback unit 28 with a status signal indicating whether the operating mode is the standby mode.

In the HDD 27, music data or the like, supplied from the recording/playback unit 28, is recorded or played back in a built-in hard disk 27B. The HDD 27 supplies the recording/playback unit 28 with music data played back from the hard disk 27B.

The recording/playback unit 28 performs various types of processing in response to an operation signal which is supplied from the operation unit 32 and which represents a user's operation. The recording/playback unit 28 performs, for example, supplying the HDD 27 with music data from the recording/playback unit 28, and supplying the audio output unit 31 with music data supplied from the HDD 27. The recording/playback unit 28 supplies the communication unit control signal to the switch 24 and supplies the HDD control signal to the switch 25.

In addition, the recording/playback unit 28 supplies a standby command to the communication unit 26. The recording/playback unit 28 controls a liquid crystal display (LCD) 51 of the display output unit 33 to display various images and e-mail which is transmitted and received by the communication unit 26, and controls a light emitting diode (LED) 52 of the display output unit 33 to light or flash. For example, when being supplied by the communication unit 26 with the status signal, which indicates that the operating mode is not the standby mode, the communication unit 26 lights the LED 52 to notify a user that the communication unit 26 is operating.

The microphone 30 collects and supplies ambient sounds to the communication unit 26. The audio output unit 31 includes headphones 41 and a speaker 42, and outputs the sound supplied from the communication unit 26 and the sound supplied from the recording/playback unit 28. The operation unit 32 includes keys, such as a play key, an AMS (Automatic Music Sensor) key, and a volume key, and receives a user's operation. For example, the operation unit 32 supplies the recording/playback unit 28 with an operation signal representing a user's operation. The display output unit 33 includes the LCD 51 and the LED 52. The LCD 51 is controlled by the recording/playback unit 28 to display images. The LED 52 is controlled by the recording/playback unit 28 to light or flash.

Fig. 3 is a detailed block diagram showing the communication unit 26 shown in Fig. 2.

The communication unit 26 shown in Fig. 3 includes a power supply section 71, a microcomputer 72, a selecting section 73, a receiving section 74, a modem 75, a flash memory 76, a codec 77, a digital-to-analog (D/A) conversion unit 78, an analog-to-digital (A/D) conversion unit 79, and a transmitting section 80.

The power supply section 71 is supplied with power by the power supply circuit 22A of the power supply unit 22 in Fig. 2 through the power supply line 26A and the switch 24. The power supply section 71 is controlled by the microcomputer 72 to supply power to portions of the communication unit 26.

The microcomputer 72 sets the operating mode to the standby mode in response to the standby command supplied from the recording/playback unit 28 in Fig. 2. At this time, the microcomputer 72 controls the power supply section 71 to stop supplying power to portions other than the microcomputer 72 and the modem 75. The power consumption of the microcomputer 72 and the modem 75 is sufficiently less than the power consumption of the entirety of the communication unit 26.

The microcomputer 72 also controls the modem 75 and the transmitting section 80. The microcomputer 72 supplies the recording/playback unit 28 with a status signal indicating whether the operating mode is the standby mode.

The selecting section 73 supplies the receiving section 74 with the radio waves received from the base station 11 through the antenna 29. The selecting section 73 also transmits radio waves supplied from the transmitting section 80 to the base station 11 through the antenna 29. In other words, the selecting section 73 communicates with a different device through the base station 11.

The receiving section 74 supplies the modem 75 with the radio waves supplied from the selecting section 73. The modem 75 includes a demodulator 91 and a modulator 92. The demodulator 91 demodulates the radio waves from the receiving section 74 in accordance with the GSM (Global System for Mobile Communications) method, the CDMA (Code Division Multiple Access) method, or the like, and supplies and temporarily stores the resultant data as received data in the flash memory 76.

After reading the received data from the flash memory 76, the demodulator 91 supplies the recording/playback unit 28 or the microcomputer 72 with music data in the received data, and supplies the codec 77 with calling data and (data of) e-mail in the received data. The modulator 92 modulates calling data and e-mail supplied from an encoder 3102 of the codec 77 in accordance with the GSM method, the CDMA method, or the like, and supplies the resultant radio waves to the transmitting section 80.

The codec 77 includes a decoder 3101 and the encoder 3102. The decoder 3101 decodes the calling data supplied from the demodulator 91 and supplies the decoded data to the D/A conversion section 78. The decoder 3101 decodes the e-mail supplied from the demodulator 91 and supplies the decoded e-mail to the recording/playback unit 28. The encoder 3102 encodes the calling data supplied from the A/D conversion section 79 or the e-mail supplied from the HDD 27, and supplies the encoded data or mail to the modulator 92 of the modem 75.

The D/A conversion section 78 performs D/A conversion on the calling data supplied from the decoder 3101 of the codec 77, and supplies the resultant analog signal to the audio output unit 31 (Fig. 2). This allows the user to hear speech of a calling party. The A/D conversion section 79 performs A/D conversion on the ambient sounds (analog signal) supplied from the microphone 30, and supplies the resultant digital data as calling data to the encoder 3102 of the codec 77. The transmitting section 80 supplies the selecting section 73 with the radio waves supplied from the demodulator 91 of the modem 75.

Fig. 4 is a detailed block diagram showing an example of the configuration of the recording/playback unit 28 shown in Fig. 2.

The recording/playback unit 28 in Fig. 4 includes a power supply section 101, a central processing unit (CPU) 102, a bus 103, a random access memory (RAM) 104, a flash memory 105, a processing section 106, an input amplifier 107, an ADC (analog digital converter) 108, a codec 109, a DAC (digital analog converter) 110, an output amplifier 111, an image capturing section 112, a buffer RAM 113, and a USB (Universal Serial Bus) 114.

The power supply section 101 is supplied with power from the power supply circuit 22C of the power supply unit 22 in Fig. 2 through the power supply line 28A. The power supply section 101 supplies power to portions of the recording/playback unit 28.

The CPU 102 controls the portions to execute various types of processing. For example, the CPU 102 controls each portion in response to an operation signal supplied from the operation unit 32 (Fig. 2) through a CPU I/F (interface) 128. The CPU 102 controls supplying power to the portions other than the microcomputer 72 and modem 75 of the communication unit 26 (Fig. 3) by commanding the microcomputer 72 of the communication unit 26 (Fig. 3) to be on standby. The CPU 102 also controls supplying power to the communication unit 26 and the HDD 27 by supplying the switch 24 with a communication unit control signal that controls supplying power to the communication unit 26 and supplying the switch 25 with an HDD control signal that controls supplying the power to the HDD 27.

The CPU 102 uses the CPU I/F 128 to control the display output unit 33 (Fig. 2) to perform displaying, on the LCD 51 of the display output unit 33, various images and the e-mail supplied from the communication unit 26 through a communication unit I/F 125 and the CPU I/F 128, and lighting or flashing the LED 52 of the display output unit 33. In response to the operation signal from the operation unit 32 (Fig. 2), the CPU 102 creates (data of) e-mail to be transmitted, and supplies the created data to the CPU 102 of the communication unit 26 through the CPU I/F 128 and the communication unit I/F 125.

The CPU 102 connects to the RAM 104, the flash memory 105, and the CPU I/F 128 of the processing section 106 via the bus 103. The RAM 104 stores a program for use in execution by the CPU 102, and parameters that vary, if needed, during the execution. The flash memory 105 stores, for example, programs that are used by the CPU 102, parameters that vary, if needed, during the execution, computing parameters, etc.

The processing section 106 includes an image capturing section I/F 121, a RAM I/F 122, a codec 123, a USB I/F 124, a communication unit I/F 125, a codec 126, a DMAC (direct memory access controller) 127, a CPU I/F 128, and an HDD I/F 129.

The image capturing section I/F 121 supplies the codec 123 with image data supplied from the image capturing section 112. Under the control of the DMAC 127, the RAM I/F 122 reads and supplies music data in the buffer RAM 113 to the codec 126 or the HDD I/F 129, and stores music data from communication unit I/F 125 or the HDD I/F 129 in the buffer RAM 113. In accordance with, for example, the JPEG (Joint Photographic Experts Group) standard, the codec 123 encodes image data from the image capturing section I/F 121, and decodes image data from the HDD I/F 129. The codec 123 supplies the decoded image data to the display output unit 33 through the CPU I/F 128 and the bus 103, and displays, on the LCD 51 of the display output unit 33 (Fig. 2), an image corresponding to the image data.

The USB I/F 124 downloads music data and image data from an external apparatus, such as a personal computer (not shown) connected via the USB 114, and supplies the downloaded data to the HDD I/F 129, and uses the USB 114 to transmit, to the external apparatus, music data and image data supplied from the HDD I/F 129.

The communication unit I/F 125 is supplied with music data from the demodulator 91 (Fig. 3) of the communication unit 26, and supplies the music data to the RAM I/F 122. The communication unit I/F 125 is supplied with the status signal from the microcomputer 72 (Fig. 3) of the communication unit 26. The communication unit I/F 125 supplies the status signal to the CPU 102 through the CPU I/F 128 and the bus 103. The communication unit I/F 125 supplies the microcomputer 72 of the communication unit 26 with a standby command supplied from the CPU 102 through the bus 103 and the CPU I/F 128.

The codec 126 supplies the HDD I/F 129 with audio data supplied from an encoder 131 of the codec 109. The audio data is data of sounds collected by the microphone 30 (Fig. 3) in cases other than calling. Music data and audio data from the HDD I/F 129 are supplied to a decoder 132 of the codec 109. The DMAC 127 controls the RAM I/F 122 to perform storing music data and audio data read from the HDD 27 in the buffer RAM 113, and supplying the codec 126 with music data and audio data after reading the music data and the audio data from the buffer RAM 113.

The CPU I/F 128 supplies the communication unit I/F 125 with a standby command supplied from the CPU 102 through the bus 103, and supplies the CPU 102 with a status signal supplied from the communication unit I/F 125.

The HDD I/F 129 reads and supplies image data recorded on the hard disk 27B of the HDD 27 (Fig. 2) to the codec 123 or the USB I/F 124, and reads and supplies music data and audio data recorded on the hard disk 27B to the RAM I/F 122 or the USB I/F 124. The HDD I/F 129 also records, on the hard disk 27B of the HDD 27, the music data from the RAM I/F 122, the image data from the codec 123, the image data and music data from the USB I/F 124, or the audio data from the codec 126.

The input amplifier 107 is supplied with (an analog signal of) the sound from the microphone 30 (Fig. 2), and the analog signal is amplified and supplied to the ADC 108. The ADC 108 performs A/D conversion on the analog signal from the input amplifier 107, and supplies the resultant digital signal as audio data to the codec 109.

The codec 109 includes the encoder 131 and the decoder 132. The encoder 131 encodes the audio data from the ADC 108 in accordance with a predetermined method, and supplies the encoded audio data to the codec 126. The decoder 132 decodes the audio data from the codec 126 in accordance with a predetermined method, and supplies the decoded audio data to the DAC 110.

The DAC 110 performs D/A conversion on the music data and audio data from the decoder 132 of the codec 109, and supplies the resultant analog signal as a music signal and an audio signal to the output amplifier 111. The output amplifier 111 amplifies the music signal and audio signal from the DAC 110, and supplies the amplified signals to the audio output unit 31 (Fig. 2). As a result, one of music corresponding to the music signal and sound corresponding to the audio signal is output from the headphones 41 or speaker 42 of the audio output unit 31.

The image capturing section 112 includes a lens unit 141, an image sensor 142, and a captured image processor 143. Light reflected by a subject is incident on the image sensor 142 through the lens unit 141. The image sensor 142 includes, for example, a CCD (charge coupled device) and a CMOS (complementary metal oxide semiconductor). The image sensor 142 photoelectrically converts the light incident through the lens unit 141, and supplies the resultant image signal to the captured image processor 143.

The captured image processor 143 includes a signal processor 151 and a CPU 152. The signal processor 151 performs predetermined processing, such as A/D conversion, on the image signal from the captured image processor 143, and supplies the resultant digital signal as image data to the image capturing section I/F 121 of the processing section 106. The CPU 152 controls each portion of the image capturing section 112 to capture an image of the subject.

The buffer RAM 113 stores the music data and audio data from the RAM I/F 122. The USB 114 transmits, to an external apparatus, the image data and music data supplied from the USB I/F 124, and supplies the USB I/F 124 with image data and music data from the external apparatus.

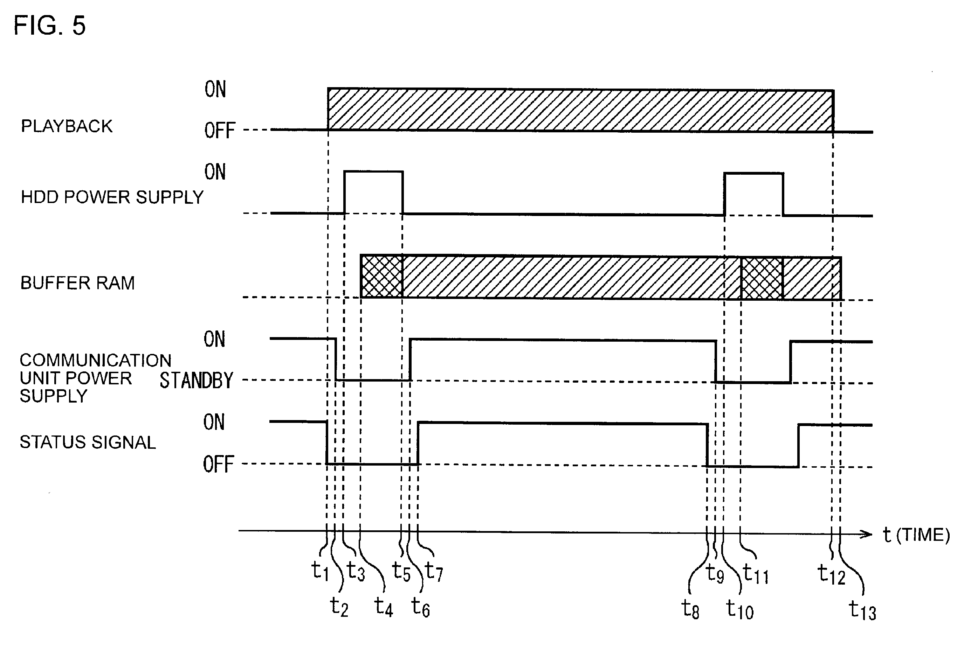

Next, power supply control by the CPU 102 of the recording/playback unit 28 (Fig. 4) of power supply to the communication unit 26 and the HDD 27 is described below with reference to Figs. 5 to 7. In Figs. 5 to 7, the axes of abscissa indicate time.

In the following description, in a case in which the power supply of the recording/playback device 12 is turned on, that is, when power is supplied from (the power supply circuit 22C of) the power supply unit 22 to the recording/playback unit 28, by operating the operation unit 32 (Fig. 2) by the user, when recording or playback of music data is not commanded, the CPU 102 can supply the switch 24 with the communication unit control signal that allows supplying power to the communication unit 26, and can supply the switch 25 with the HDD control signal that disallows supplying the power to the HDD 27. In other words, the communication unit 26 can be supplied with power and the HDD 27 can be supplied with no power.

Fig. 5 illustrates power supply control that is performed by the CPU 102 when playback of music data recorded on the hard disk 27B of the HDD 27 is commanded by operating the operation unit 32 by the user while the user is not performing calling.

As shown in Fig. 5, in an embodiment of the present invention, when the user performs an operation on the operation unit 32 to command playback of music data at time t₁, the operation unit 32 supplies the CPU 102 of the recording/playback unit 28 with an operation signal representing the operation. In response to the supplied operation signal, the CPU 102 supplies a standby command to the microcomputer 72 of the communication unit 26 through the bus 103, the CPU I/F 128, and the communication unit I/F 125. In response to the standby command from the CPU 102, the microcomputer 72 changes the status signal supplied to the CPU 102 through the communication unit I/F 125, the CPU I/F 128, and the bus 103 so as to indicate that the operating mode is the standby mode (in Fig. 5, the status signal is turned off).

At time t₂, the microcomputer 72 of the communication unit 26 changes the operating mode to the standby mode in response to the standby command. In other words, the microcomputer 72 controls the power supply section 71 to stop supplying power to the portions other than the microcomputer 72 and the modem 75. In other words, supplying the power to portions other than the microcomputer 72 and modem 75 of the communication unit 26 is disallowed.

After that, at time t₃, the CPU 102 supplies the switch 25 with the HDD control signal that allows supplying the power to the HDD 27. The switch 25 starts to supply power to (the power supply circuit 22B of) the power supply unit 22 on the basis of the HDD control signal. As a result, the power supply of the HDD 27 is turned on.

When the power supply of the HDD 27 is turned on, the HDD I/F 129 is controlled by the CPU 102 to perform reading and supplying the music data on the hard disk 27B in the HDD 27 to the RAM I/F 122. At time t₄, the RAM I/F 122 is controlled by the DMAC 127 to supply and store (write) music data from the HDD I/F 129 in the buffer RAM 113, and to read and supply music data in the buffer RAM 113 to the codec 126.

The codec 126 supplies the music data from the buffer RAM 113 to the decoder 132 of the codec 126, and the decoder 132 decodes the music data and supplies the decoded music data to the DAC 110. The DAC 110 performs D/A conversion on the decoded music data and supplies the resultant music signal to the output amplifier 111. The base station 11 amplifies the music signal and supplies the amplified music signal to the audio output unit 31. The headphones 41 and speaker 42 of the audio output unit 31 output music corresponding to the amplified music signal.

The RAM I/F 122 reads the music data from the HDD I/F 129 in the buffer RAM 113 until time t₅ at which storage space (free space) in the buffer RAM 113 for the music data is run out (the storage size of the buffer RAM 113 is equal to or greater than a manufacture-set predetermined size). The RAM I/F 122 also reads music data from the buffer RAM 113. In other words, during the period from time t₄ to time t5, the buffer RAM 113 performs both reading and writing.

At time t₅, the CPU 102 turns off the power supply of the HDD 27 by supplying the switch 25 with the HDD control switch that disallows supplying the power to the HDD 27. This causes the HDD 27 to stop playing back the music data, and the HDD I/F 129 stops supplying the music data to the RAM I/F 122. The RAM I/F 122 also stops writing the music data from the HDD 27 and only reading the music data. As a result, the audio output unit 31 does not stop outputting music corresponding to the music data stored in the buffer RAM 113.

After that, at time t₆, the CPU 102 supplies the microcomputer 72 with a command to supply power to the portions of the communication unit 26. In response to the command, the microcomputer 72 controls the power supply section 71 to supply the power of (the power supply circuit 22A of) the power supply unit 22 to the portions of the communication unit 26. In other words, the power supply of the communication unit 26 is turned on. This causes the communication unit 26 to perform calling and e-mail transmission and reception from time t₆ to time t₉ (described later) at which the operating mode of the communication unit 26 is changed to the standby mode. In other words, the user can perform calling and can transmit and receive e-mail.

At time t₇, the power supply section 71 of the communication unit 26 supplies the portions with the power supplied from (the power supply circuit 22A of) the power supply unit 22 through the power supply line 26A and the switch 24. The microcomputer 72 changes the status signal supplied to the CPU 102 so as to indicate that the operating mode is not the standby mode (the status signal is turned on in Fig. 5).

At time t₈ before all the music data stored in the buffer RAM 113 is read, the CPU 102 supplies the standby command to the microcomputer 72. In response to the standby command, similarly to the case at time t₁, the microcomputer 72 changes the status signal supplied to the CPU 102 so as to indicate that the operating mode is the standby mode.

Similarly to the case at time t₂, at time t₉, the microcomputer 72 changes the operating mode to the standby mode.

After that, at time t₁₀, similarly to the case at time t₃, the CPU 102 turns on the power supply of the HDD 27 by supplying the switch 25 with the HDD control signal that allows supplying the power to the HDD 27. Similarly to the case at time t₄, at time t₁₁, the music data played back from the hard disk 27B is stored in the buffer RAM 113 through the HDD I/F 129 and the RAM I/F 122. In other words, both writing to the buffer RAM 113 and reading from the buffer RAM 113 are simultaneously performed. By operating the operating unit 32 by the user, the above-described processing is repeatedly performed until finishing playback is commanded.

When the user operates the operating unit 32 to command finishing playback at time t₁₂, in response to an operation signal representing the operation, the CPU 102 controls the DMAC 127 to stop reading music data from the buffer RAM 113. As a result, at time t₁₃, the RAM I/F 122 is controlled by the DMAC 127 to stop reading the music data from the buffer RAM 113.

As described above, in the recording/playback device 12, the music data recorded on the hard disk 27B is intermittently read and written in the buffer RAM 113, and, in the period (for example, the period from time t₃ to time t₅), the operating mode of the communication unit 26 is changed to the standby mode. However, the music from the audio output unit 31 continues to be output after its output is started in response to the playback command by the user at time t₁ until its output finishes at time t₁₃ in response to the playback command by the user at time t₁₂. In other words, the recording/playback device 12 can perform communication in a predetermined period (for example, the period from time t₆ to time t₈) while guaranteeing continuous output of music. This enables the user to perform communication, such as e-mail, while listening to music.

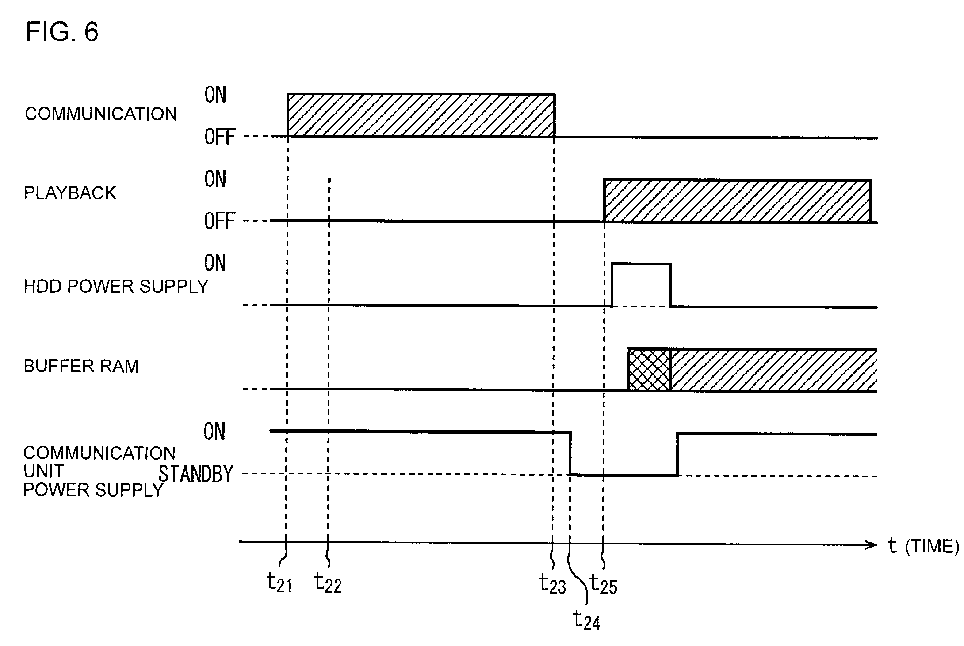

Fig. 6 illustrates power supply control performed by the CPU 102 when playback of music is commanded by the user while the user is calling.

As shown in Fig. 6, in an embodiment of the present invention, when the user operates the operating unit 32 to command calling at time t₂₁, the operating unit 32 supplies the CPU 102 of the recording/playback unit 28 with an operation signal representing the operation. In response to the operation signal, the CPU 102 supplies a calling command to the microcomputer 72 of the communication unit 26. In response to the calling command, the microcomputer 72 controls the modem 75 to perform calling.

Specifically, the demodulator 91 of the modem 75 demodulates the radio waves from the receiving section 74 and supplies the resultant calling data to the audio output unit 31 through the power supply section 101 and the D/A conversion section 78. Speech corresponding to the calling data is output from the audio output unit 31. In addition, the modem 75 modulates calling data supplied from the microphone 30 through the A/D conversion section 79 and the CPU 102, and transmits the resultant radio waves to the base station 11 through the transmitting section 80, the selecting section 73, and the antenna 29.

When, at time t₂₁, the user operates the operating unit 32 to command playing back music data, in response to the operation signal from the operating unit 32, the CPU 102 controls the display output unit 33 to display a message that indicates inability to play back music. Until the user operates the operating unit 32 to finish calling, the CPU 102 does not play back music data. The CPU 102 may control the audio output unit 31 to output sound corresponding to the message from the audio output unit 31 without controlling the display output unit 33 to display the message.

When, at time t₂₃, the user operates the operating unit 32 to command finishing calling, the CPU 102 supplies the standby command to the microcomputer 72. In response to the standby command, the microcomputer 72 changes the status signal supplied to the CPU 102 so as to indicate that the operating mode is the standby mode.

At time t₂₄, the microcomputer 72 sets the operating mode to the standby mode. After that, at time t₂₅, the CPU 102 starts to play back music data. Specifically, similarly to the above-described case of Fig. 5, the music data is played back.

In the case of Fig. 6, the user commands playing back music while performing calling, playback of music data is automatically started after the calling finishes. However, when playback of music data is newly commanded after the playback command during calling is ignored and the calling finishes, playback of music data may be started.

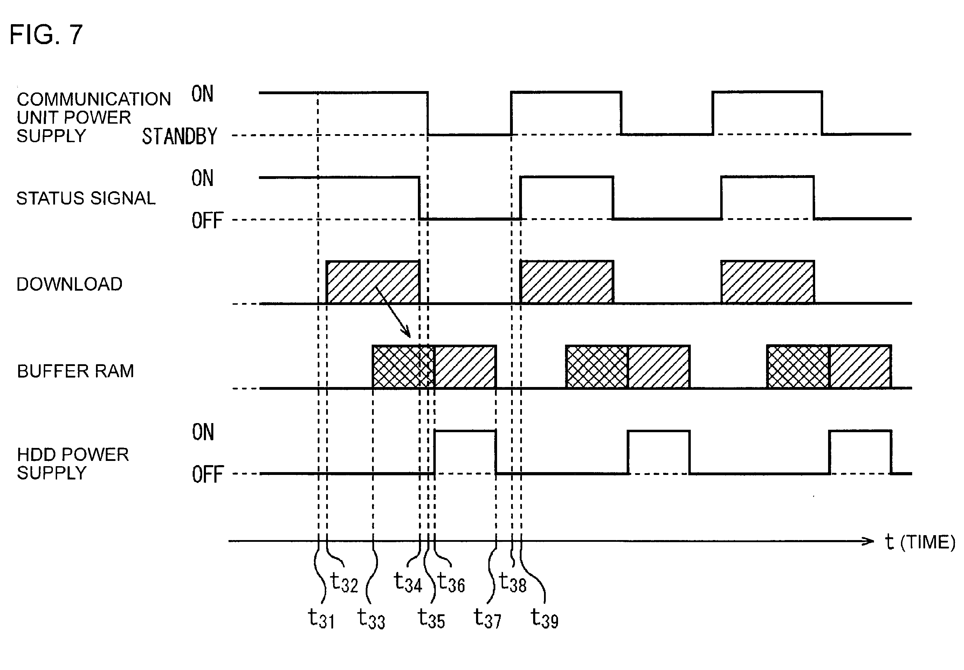

Fig. 7 illustrates power supply control performed by the CPU 102 when the user commands downloading music data through the base station 11.

As shown in Fig. 7, in an embodiment of the present invention when, at time t₃₁, the user operates the operating unit 32 to command downloading music data through the base station 11, the operating unit 32 supplies the CPU 102 of the recording/playback unit 28 with an operation signal representing the operation. In response to the operation signal, the CPU 102 supplies the microcomputer 72 of the communication unit 26 with a downloading command. In response to the downloading command, the microcomputer 72 controls, for example, the modulator 92 of the modem 75 to modulate data for requesting downloading, and transmits the resultant radio waves to the base station 11 through the transmitting section 80, the selecting section 73, and the antenna 29. In response to the request, a music data distributing server (not shown) transmits music data as radio waves to the recording/playback device 12 through the base station 11.

At time t₃₂, the antenna 29 receives the radio waves and starts downloading. The radio waves received by the antenna 29 are supplied to the demodulator 91 through the receiving section 74. The modulator 92 demodulates the radio waves and temporarily stores the resultant music data in the flash memory 76. The modulator 92 reads the music data stored in the flash memory 76, and supplies the music data to the RAM I/F 122 through the communication unit I/F 125 of the recording/playback unit 28.

At time t₃₃, under the control of the DMAC 127, the RAM I/F 122 starts to write the music data supplied from the communication unit I/F 125 in the buffer RAM 113. At time t₃₄ (the amount of data before the free space of the buffer RAM 113 is run out is referred to as a third amount of data) before the free space of the buffer RAM 113 is run out, the CPU 102 supplies the standby command to the microcomputer 72. The microcomputer 72 changes the status signal supplied to the CPU 102 so as to indicate that the operating mode is the standby mode.

At time t₃₅, the microcomputer 72 controls the power supply section 71 to stop supplying the power to the portions other than the microcomputer 72 and the modem 75. In other words, the microcomputer 72 sets the operating mode of the communication unit 26 to the standby mode. This stops downloading the music data.

For example, at this time, the microcomputer 72 stores, in a built-in RAM (not shown), information (for example, the position, from the beginning, of music data to be downloaded) of last downloaded music data. When restarting downloading, the microcomputer 72 transmits the information to the music data distributing server through the modulator 92, the transmitting section 80, the selecting section 73, the antenna 29, and the base station 11. On the basis of the information transmitted from the recording/playback device 12, the server performs music data transmission from music data that follows the music data last downloaded by the recording/playback device 12.

At time t₃₆ at which the free space of the buffer RAM 113 is run out, the CPU 102 turns on the power supply of the HDD 27 by supplying the switch 25 with the HDD control signal that allows supplying the power to the HDD 27. Under the control of the DMAC 127, the RAM I/F 122 stops writing the music data in the buffer RAM 113 and starts to read the music data stored in the buffer RAM 113.

The buffer RAM 113 supplies the HDD I/F 129 with the music data read from the buffer RAM 113, and the HDD I/F 129 records the supplied music data in the hard disk 27B of the HDD 27. At time t₃₇ at which the music data stored in the buffer RAM 113 is all read, the buffer RAM 113 stops reading the music data from the buffer RAM 113. The CPU 102 also turns off the power supply of the HDD 27 by supplying the switch 25 with the HDD control signal that disallows supplying the power to the HDD 27. In addition, in another control method, a time just before (when the amount of music data stored decreases) the music data recorded in the buffer RAM 113 is all read may be used as time t₃₇. The amount of data in the buffer RAM 113 at time t₃₇ is referred to as a fourth amount of data.

At time t₃₈, the CPU 102 supplies the microcomputer 72 with a command to supply power to the portions of the communication unit 26. In response to the command, the microcomputer 72 controls the power supply section 71 to supply the portions of the communication unit 26 with the power from (the power supply circuit 22A of) the power supply unit 22. In other words, the power supply of the communication unit 26 is turned on. At time t₃₉, the microcomputer 72 changes the status signal supplied to the CPU 102 so as to indicate that the operating mode is not the standby mode.

The microcomputer 72 also controls, for example, the modulator 92 of the modem 75 to modulate data for requesting downloading and information of the last downloaded music data stored at time t₃₅, and to transmit the resultant radio waves to the base station 11. As a result, music data that follows the last downloaded music data transmitted from the server is received in the form of radio waves and downloading is restarted. Subsequently, by operating the operating unit 32 by the user, the above-described processing is repeatedly performed until the user commands finishing the downloading.

Next, a power control process performed in a playback mode in which the CPU 102 of the recording/playback unit 28 plays back music data in accordance with an embodiment of the present invention is described below with reference to Fig. 8. The power control process in the playback mode is started, for example, when the user operates the operating unit 32 to command playing back music data.

In step S1, the CPU 102 determines whether or not the recording/playback device 12 is communicating. Specifically, the CPU 102 determines that the recording/playback device 12 is communicating in a period after the CPU 102 is supplied with an operation signal representing the operation of a calling command from the user until the CPU 102 is supplied with an operation signal representing a calling finishing operation from the user.

If, in step S1, it is determined that the recording/playback unit 28 is communicating, the CPU 102 proceeds to step S2. In step S2, the CPU 102 controls the LCD 51 of the display output unit 33 to display a message representing inability to play back music data, returns to step S 1.

Alternatively, if, in step S1, it is determined that the recording/playback unit 28 is not communicating, the CPU 102 proceeds to step S3, and supplies the microcomputer 72 of the communication unit 26 with a standby command. At this time, the microcomputer 72 controls the power supply section 71 to stop supplying power to the portions other than the microcomputer 72 and the modem 75. In other words, the microcomputer 72 sets the operating mode of the communication unit 26 to the standby mode.

After performing step S3, the CPU 102 proceeds to step S4, and turns on the power supply of the HDD 27 by supplying the switch 25 with the HDD control signal that allows supplying the power to the HDD 27.

Proceeding to step S5 after performing step S4, by detecting the amount of storage in the buffer RAM 113, the CPU 102 determines whether or not data storage is complete. Specifically, when the power supply of the HDD 27 is turned on, the HDD I/F 129 plays back the music data recorded on the hard disk 27B and supplies the played-back music data to the RAM I/F 122. Under the control of the DMAC 127, the RAM I/F 122 stores the supplied music data in the buffer RAM 113 and reads music data stored in the buffer RAM 113. The CPU 102 detects, for example, the amount of storage in the buffer RAM 113. When the amount of storage is equal to or greater than a manufacturer-set predetermined amount of storage, the CPU 102 determines that the data storage is complete. When the amount of storage is less than the displayed amount of storage, the CPU 102 determines that the data storage is not complete.

If, in step S5, the CPU 102 has determined that the data storage in the buffer RAM 113 is not complete, the CPU 102 is on standby until it determines that the data storage is complete.

If, in step S5, the CPU 102 has determined that the data storage in the buffer RAM 113 is complete, the CPU 102 proceeds to step S6 and turns off the power supply of the HDD 27 by supplying the switch 25 with the HDD control signal that disallows supplying the power to the HDD 27.

Proceeding to step S7 after performing step S6, the CPU 102 supplies, to the microcomputer 72, a command to supply power to the portions of the communication unit 26. In response to the command, the microcomputer 72 controls the power supply section 71 to supply the power from (the power supply circuit 22A of) the power supply unit 22 to the portions of the communication unit 26. In other words, the power supply of the communication unit 26 is turned on. This enables the communication unit 26 to perform communication.

Proceeding to step S8 after performing step S7, by detecting the amount of storage in the buffer RAM 113, the CPU 102 determines whether or not the amount of storage is equal to or less than a predetermined amount of storage. The predetermined amount of storage is, for example, a manufacturer-set predetermined value, and is a minimum amount of storage of music data that is necessary for continuously playing back music data. Specifically, turning off the power supply of the HDD 27 finishes playing back the music data recorded on the hard disk 27B. Thus, the RAM I/F 122 is controlled by the DMAC 127 to perform only reading the music data stored in the buffer RAM 113. By detecting the amount of storage in the buffer RAM 113, the CPU 102 determines whether or not the amount of storage is equal to or less than a predetermined amount of storage.

If, in step S8, the CPU 102 has determined that the amount of storage in the buffer RAM 113 is not equal to or less than the predetermined amount of storage, the CPU 102 is on standby until it determines that the amount of storage is equal to or less than the predetermined amount of storage.

If, in step S8, the CPU 102 has determined that the amount of storage in the buffer RAM 113 is equal to or less than, the CPU 102 proceeds to step S9. In step S9, the CPU 102 determines whether to finish playback, that is, whether or not the operation signal representing the playback finishing operation has been supplied from the operating unit 32 to the CPU 102.

If, in step S9, the CPU 102 has determined not to finish playback, that is, it is determined that the operation signal representing the playback finishing operation has not been supplied, the CPU 102 returns to step S3 and the above-described processing is repeatedly performed.

Alternatively, if, in step S9, the CPU 102 has determined to finish playback, that is, it is determined that the operation signal representing the playback finishing operation has been supplied, the power control process finishes.

As described above, in the playback-mode power control process in Fig. 8, when the power supply of the HDD 27 is turned on, the operating mode of the communication unit 26 is set to the standby mode, and, when the power supply of the communication unit 26 is turned on, the power supply of the HDD 27 is turned off. In other words, the CPU 102 controls supplying power so that power is exclusively supplied to the communication unit 26 (the portions other than the microcomputer 72 and modem 75 of the communication unit 26) and the HDD 27. As described above, the power consumption of the microcomputer 72 and modem 75 is sufficiently less than the power consumption of the entirety of the communication unit 26. Thus, by setting the communication unit 26 to the standby mode when turning on the power supply of the HDD 27, the power consumption of the recording/playback device 12 can be reduced than power consumption in the case of supplying power to the entirety of the communication unit 26 and the communication unit 26.

Next, in an embodiment of the present invention a buffer RAM process in which the recording/playback unit 28 in Fig. 4 writes or reads music data in the buffer RAM 113 as described below with reference to Fig. 9. This buffer RAM process is performed simultaneously with the playback-mode power control process in Fig. 8.

In step S11, the CPU 102 determines whether or not the power supply of the HDD 27 has been turned on, that is, whether or not, in step S4 of Fig. 8, the HDD control signal that allows supplying the power to the HDD 27 has been supplied to the switch 25. If the CPU 102 has determined that the power supply of the HDD 27 has not been turned on, the CPU 102 is on standby until the power supply of the HDD 27 is turned on.

If, in step S11, the CPU 102 has determined that the power supply of the HDD 27 has been turned on, the CPU 102 proceeds to step S12. In step S 12, the RAM I/F 122 starts to write, in the buffer RAM 113, music data that is played back from the hard disk 27B by turning on the power supply of the HDD 27.

Proceeding to step S 13 after performing step S 12, the RAM I/F 122 starts to read, from the buffer RAM 113, the music data stored in step S12. The process proceeds to step S14.

In step S 14, the CPU 102 determines whether or not the power supply of the HDD 27 has been turned off, that is, whether or not, in step S6 of Fig. 8, the HDD control signal that disallows supplying the power to the HDD 27 has been supplied to the switch 25. The CPU 102 is also on standby until the power supply of the HDD 27 is turned off. In other words, writing to the buffer RAM 113 and reading from the buffer RAM 113 are performed until data storage in the buffer RAM 113 is complete.

Alternatively, if, in step S 14, the CPU 102 has determined that the power supply of the HDD 27 has been turned off, the process proceeds to step S 15. Since music data is not supplied from the HDD 27 by turning off the power supply of the HDD 27, the RAM I/F 122 stops writing (operation) to the buffer RAM 113.

Proceeding to step S16 after performing step S15, the CPU 102 determines whether to finish playback similarly to step S9 of Fig. 8. If the CPU 102 has determined not to finish playback, the process proceeds to step S 17.

Similarly to step S11, in step S 17, the CPU 102 determines whether or not the power supply of the HDD 27 has been turned on. If the CPU 102 has determined that the power supply of the HDD 27 has not been turned on, the process returns to step S16.

If, in step S 17, the CPU 102 has determined that the power supply of the HDD 27 has been turned on, the process proceeds to step S18. Similarly to step S12, in step S18, the RAM I/F 122 starts to write the music data from the HDD 27 in the buffer RAM 113. The process returns to step S14, and the above-described processing is repeatedly performed.

If, in step S16, the CPU 102 has determined to finish playback, the process proceeds to step S 19. In step S 19, the RAM I/F 122 finishes reading the music data from the buffer RAM 113, and the buffer RAM process finishes.

As described above, reading of the music data from the buffer RAM 113 is continuously performed after being started in step S 13 until finishing in step S 19, in other words, after playback of the music data is commanded until finishing playback of the music data is commanded. As a result, after the playback of the music data is commanded until finishing the playback of the music data is commanded, music corresponding to the music data read from the buffer RAM 113 is continuously output from the audio output unit 31. As described above, by temporarily storing the music data read from the HDD 27 in the buffer RAM 113, music data can be continuously output from the audio output unit 31 without the need to constantly turn on the power supply of the HDD 27.

An e-mail transmitting/receiving process of the communication unit 26 (Fig. 3) in which it transmits or receives e-mail in accordance with an embodiment of the present invention is described below with reference to Fig. 10. The e-mail transmitting/receiving process is performed simultaneously with the playback-mode power control process in Fig. 8 and the buffer RAM process in Fig. 9.

In step S21, the microcomputer 72 (Fig. 3) determines whether or not the power supply of the communication unit 26 has been turned on, in other words, whether power is supplied to the portions of the communication unit 26. If the microcomputer 72 has determined that the power supply of the communication unit 26 has not been turned on, the microcomputer 72 is on standby until the power supply of the communication unit 26 is turned on.

If, in step S21, the microcomputer 72 has determined that the power supply of the communication unit 26 has been turned on, the process proceeds to step S22. In step S22, the microcomputer 72 (Fig. 3) determines whether or not an interruption position is stored in a built-in RAM (not shown), that is, whether or not the interruption position has been stored in step S30 (described later). If the microcomputer 72 has determined that the interruption position is stored, the process proceeds to step S23.

In step S23, the encoding section 4102 determines whether to transmit e-mail. Specifically, when the user operates the operating unit 32 to command transmitting e-mail, in response to an operation signal representing the transmitting operation, the CPU 102 of the recording/playback unit 28 creates (data of) e-mail to be transmitted, and stores the e-mail in the RAM 104. The CPU 102 reads the e-mail stored in the RAM 104 and supplies the e-mail to the encoding section 4102 of the communication unit 26 through the CPU I/F 128 and the communication unit I/F 125. Accordingly, by determining whether or not the e-mail has been supplied from the CPU 102, the encoding section 4102 determines whether to transmit e-mail.

If, in step S23, the encoding section 4102 has determined to transmit the e-mail, the process proceeds to step S24. In step S24, the encoding section 4102 encodes the e-mail and supplies the encoded e-mail to the modulator 92. The modulator 92 modulates the encoded e-mail and transmits the modulated e-mail to a receiving party through the transmitting section 80, the selecting section 73, the antenna 29, and the base station 11.

If, in step S23, the microcomputer 72 has determined not to transmit the e-mail, that is, when the e-mail has not been supplied from the CPU 102, the process proceeds to step S25. The receiving section 74 determines whether to have received e-mail through the base station 11, the antenna 29, and the selecting section 73. If the receiving section 74 has determined to have received the e-mail, the process proceeds to step S26.

In step S26, the received e-mail is supplied from the receiving section 74 and demodulated in the demodulator 91, and the demodulated e-mail is stored in the flash memory 76.

If, in step S22, the microcomputer 72 has determined that the interruption position is stored, the process proceeds to step S27. In step S27, on the basis of the interruption position, the microcomputer 72 controls the receiving section 74 to receive e-mail or controls the transmitting section 80 to transmit e-mail. Specifically, when the interruption position stored in the built-in RAM is an interruption position of e-mail to be received, the microcomputer 72 controls the transmitting section 80 to transmit the interruption position of the e-mail to an e-mail transmitting/receiving server (not shown) through the base station 11. On the basis of the interruption position transmitted from the communication unit 26, the server transmits data of the beginning to portion after the interruption position of e-mail (to be received by the receiving section 74) (data) to be transmitted. The receiving section 74 receives the data.

When the interruption position stored in the built-in RAM is an interruption position of e-mail to be transmitted, the microcomputer 72 supplies the interruption position of the e-mail to the CPU 102 of the recording/playback unit 28. The CPU 102 supplies, from the RAM 104, to the encoding section 4102, data from the beginning to portion after the interruption position of the e-mail that is created and stored as what to be transmitted. As a result, data of the beginning to portion after the interruption position of e-mail is transmitted from the communication unit 26 to the e-mail transmitting/receiving server through the base station 11.

After one of steps S24, S26, and S27, or if, in step S25, it is determined that the e-mail has not been received, the process proceeds to step S28. In step S28, the microcomputer 72 determines whether or not to have been supplied with the standby command from the CPU 102 of the recording/playback unit 28. If, in step S28, the microcomputer 72 has determined not to have been supplied with the standby command, the process returns to step S23 and the above-described processing is repeatedly performed.

If, in step S28, the microcomputer 72 has determined to have been supplied with the standby command, the process proceeds to step S29, and the microcomputer 72 controls the power supply section 71 to stop supplying power to the portions other than the modem 75 and the microcomputer 72. As a result, e-mail communication (transmission and reception) by the selecting section 73 is interrupted.

Proceeding to step S30 after performing step S29, the microcomputer 72 recognizes, as an interruption position, a position from the beginning of one of e-mail (data) last received through the demodulator 91 and e-mail (data) last transmitted transmission and reception the modulator 92. The microcomputer 72 stores the recognized interruption position in the built-in RAM (not shown), and the process returns to step S21.

As described above, when e-mail communication is interrupted, the microcomputer 72 stores a position at which the communication is interrupted. Thus, in step S27, it is ensured that the communication can be restarted at a portion of data after the interruption position.

Although, in the above-described step S30 of Fig. 10, the microcomputer 72 stores, in the built-in RAM, an interruption position of e-mail to be received, the interruption position may be transmitted to the e-mail transmitting/receiving server by controlling the transmitting section 80 without storing the interruption position in a RAM.

In this case, when restarting to receive e-mail, the microcomputer 72 requests e-mail reception from the server, and the server transmits e-mail (data) on the basis of an interruption position last transmitted from the transmitting section 80.

In the e-mail transmitting/receiving process in Fig. 10, when e-mail transmission or reception is interrupted, the transmission or reception is restarted at data of the beginning to portion after the interruption position of the e-mail (data). However, the transmission or reception may be restarted again.

Next, in accordance with an embodiment of the present invention, a recording-mode power control process performed by the CPU 102 when it records, on the hard disk 27B, music data downloaded through the base station 11 is described below with reference to Fig. 11. This recording-mode power control process is started, for example, when the user operates the operating unit 32 to command downloading music data.

In step S31, the CPU 102 determines whether or not music data has been supplied from (the demodulator 91 of) the communication unit 26 to the communication unit I/F 125. The CPU 102 is on standby until it determines that the music data has been supplied.

If, in step S31, the CPU 102 has determined that the music data has been supplied, it proceeds to step S32 and the communication unit I/F 125 supplies the music data to the RAM I/F 122. Under the control of the DMAC 127, the RAM I/F 122 supplies and stores the music data from the communication unit I/F 125 in the buffer RAM 113.

Proceeding to step S33 after performing step S32, similarly to step S5 of Fig. 8, by detecting the amount of storage in the buffer RAM 113, the CPU 102 determines whether data storage is complete.

If, in step S33, the CPU 102 has determined that the data storage is not complete, the process returns to step S32, and music data is stored in the buffer RAM 113 until the CPU 102 determines that the data storage is complete.

If, in step S33, the CPU 102 has determined that the data storage in the buffer RAM 113 is complete, the CPU 102 proceeds to step S34 and issues a standby command to the microcomputer 72 of the communication unit 26. At this time, the microcomputer 72 controls the power supply section 71 to stop power to the portions other than the microcomputer 72 and the modem 75. In other words, the microcomputer 72 sets the operating mode of the communication unit 26 to the standby mode. As a result, the communication unit 26 is stopped to supply the music data.

Proceeding to step S35 after performing step S34, the CPU 102 turns on the power supply of the HDD 27 by supplying the switch 25 with the HDD control signal that allows supplying the power to the HDD 27. At this time, under the control of the DMAC 127, the RAM I/F 122 stops writing the music data in the buffer RAM 113, and starts to read music data stored in the buffer RAM 113.

Proceeding to step S36 after performing step S35, the HDD I/F 129 stores, on the hard disk 27B, the music data read from the buffer RAM 113 by the RAM I/F 122, and the process proceeds to step S37.

In step S37, the CPU 102 determines whether or not the music data stored in the buffer RAM 113 has been all read. If it is determined that the music data in the buffer RAM 113 has not been all read, the process returns to step S36. In step S36, the music data read from the buffer RAM 113 is stored on the hard disk 27B until the music data stored in the buffer RAM 113 is all stored on the hard disk 27B.

If, in step S37, the CPU 102 has determined that the music data in the buffer RAM 113 has been all read, the CPU 102 proceeds to step S38, and turns off the power supply of the HDD 27 by supplying the HDD control signal that disallows supplying the power to the HDD 27.

Proceeding to step S39 after performing step S38, the CPU 102 issues, to the microcomputer 72, a command to supply power to the portions of the communication unit 26. In response to the command, the microcomputer 72 controls the power supply section 71 to supply the portions of the communication unit 26 with the power from (the power supply circuit 22A of) the power supply unit 22. In other words, the power supply of the communication unit 26 is turned on. This restarts downloading the music data, and the process returns to step S31.

As described above, in the recording-mode power control process shown in Fig. 11, when the CPU 102 turns the power supply of the HDD 27, the CPU 102 sets the communication unit 26 to the standby mode, and, when the CPU 102 turns on the power supply of the communication unit 26, the CPU 102 turns off the power supply of the HDD 27. As described above, since the power consumption of the microcomputer 72 and the modem 75 is sufficiently less than the power consumption of the entirety of the communication unit 26, by setting the communication unit 26 to the standby mode when turning on the power supply of the HDD 27, the power consumption of the recording/playback device 12 can be reduced than the case of supplying power to the entirety of the communication unit 26 and the HDD 27.

Next, in accordance with an embodiment of the present invention a music data downloading process of the communication unit 26 through the communication unit 26 in Fig. 3 is described below with reference to Fig. 12. This downloading process is started, when a music data downloading command is supplied from the CPU 102 of the HDD 27.

In step S41, the microcomputer 72 controls the modem 75 to transmit, to the base station 11, data for requesting music data downloading. Specifically, the modulator 92 of the modem 75 modulates data (for example, data for identifying music to be downloaded and data for identifying the recording/playback device 12, which requests downloading) that requests downloading of the music data supplied from the microcomputer 72, and transmits the resultant radio waves to the base station 11 through the transmitting section 80, the selecting section 73, and the antenna 29.

The music bears music-unique ID (hereinafter referred to as "music ID") as data for identifying music. The recording/playback device 12 bears, as data for identifying the recording/playback device 12, ID (hereinafter referred to as "device ID") that is unique to the recording/playback device 12. The modulator 92 transmits, as data for requesting downloading of music data, for example, music ID (e.g., 100xxxx1) of music to be downloaded and device ID (e.g., 9x98sxx) of the recording/playback device 12, which requests downloading.

Proceeding to step S42 after performing step S41, the demodulator 91 determines whether or not music data that is transmitted as radio waves from the server through the base station 11 in response to the request transmitted in step S41 has been received through the antenna 29, the selecting section 73, and the receiving section 74.

If, in step S41, the demodulator 91 has determined that the music data has not been received, the demodulator 91 is on standby until determining that the music data has been received. If, in step S42, the demodulator 91 has determined that the music data has been received, the demodulator 91 proceeds to step S43. In step S43, the demodulator 91 demodulates the music data received as radio waves and temporarily stores the resultant music data in the flash memory 76.

Proceeding to step S44 after performing step S43, the demodulator 91 reads the music data stored in the flash memory 76, and supplies the read music data to the communication unit I/F 125. The process proceeds to step S45.

In step S45, the microcomputer 72 determines whether to have been supplied with the standby command, or whether or not the standby command has been issued by the CPU 102 of the communication unit 26. If the microcomputer 72 has determined to have been supplied with the standby command, the process proceeds to step S46.

In step S46, the microcomputer 72 controls the power supply section 71 to stop supplying power to the portions other than the modem 75 and the microcomputer 72, and proceeds to step S47. In step S47, the microcomputer 72 reads, from the flash memory 76, information (for example, part for 3 minutes 20 seconds from the beginning) of music data last downloaded through the demodulator 91, and stores the read information in the built-in RAM (not shown).

Proceeding to step S48 after performing step S48, the microcomputer 72 determines whether to have been supplied by the CPU 102 with a command to supply power to the portions of the communication unit 26, in other words, whether or not the command to supply power to the portions of the communication unit 26 has been issued by the CPU 102 in step S39 of Fig. 11. If the microcomputer 72 has determined to have been supplied with the command to supply power to the portions of the communication unit 26, the microcomputer 72 is on standby until determining to have supplied with the command to supply power to the portions of the communication unit 26.

If, in step S48, the microcomputer 72 has determined to have been supplied with the command to supply power to the portion of the communication unit 26, the microcomputer 72 controls the power supply section 71 to supply power to the portions of the communication unit 26. In other words, the power supply of the communication unit 26 is turned on.

Proceeding to step S49 after performing step S48, on the basis of the information of the music data stored in the built-in RAM, the microcomputer 72 determines whether or not downloading of all the music data has finished. If the microcomputer 72 has determined that the downloading of all the music data has not finished, the microcomputer 72 proceeds to step S50.

In step S50, the microcomputer 72 supplies and controls the modulator 92 to the information (for example, part for 3 minutes 20 seconds from the beginning) of the last downloaded music data and the data (for example, music Id "100xxxx1" and device ID "9x98sxx") for requesting downloading of music data, and transmits the modulated information and data to the server through the transmitting section 80, the selecting section 73, the antenna 29, and the base station 11.

Based on the information of music data transmitted from the communication unit 26 of the recording/playback device 12, the server transmits music data that follows music data corresponding to the information. After step S49, the process returns to step S42, the music data is received (downloaded), and the above-described processing is repeatedly performed.

If, in step S45, the microcomputer 72 has determined to have been supplied with the standby command by the CPU 102 of the communication unit 26, the microcomputer 72 proceeds to step S51. Similarly to step S49, the microcomputer 72 determines whether or not downloading of all the music data has finished. If the microcomputer 72 has determined that the downloading has not finished, the microcomputer 72 returns to step S42 and repeatedly performs the above-described processing.

Alternatively, if, in each of steps S49 and S51, it is determined that the downloading of all the music data has finished, the process finishes.

Although, in step S47 of Fig. 10, the microcomputer 72 stores the information of music data in the built-in RAM, the music data may be transmitted to a music data distributing server by controlling the transmitting section 80 without storing the music data in a RAM. In this case, in step S50, the microcomputer 72 transmits only the device ID to the server.

Fig. 13 shows an example of a second embodiment of the recording/playback device 12 shown in Fig. 1. In Fig. 13, portions corresponding to those in the case of Fig. 2 are denoted by identical reference numerals.

Unlike the recording/playback device 12 shown in Fig. 2, in the recording/playback device 12 shown in Fig. 13, the power supply line 26A (Fig. 2) connected to the switch 24 and the power supply line 27A (Fig. 2) connected to the switch 25 are combined into one.

Specifically, in the recording/playback device 12 in Fig. 13, a power supply unit 200 includes the power supply circuit 22C and a DC/DC converter 201. The DC/DC converter 201 generates a large current by converting the voltage of power supplied from the exterior, the power storage unit 21, and the battery 23. The DC/DC converter 201 connects to a power supply line 202, and the power supply line 202 branches off to connect to the switches 24 and 25. The power output from the DC/DC converter 201 is supplied to the switches 24 and 25 through the power supply line 202.

Since, as described above, in the recording/playback device 12 in Fig. 13, one DC/DC converter 201 supplies power to the communication unit 26 and the HDD 27, the cost of the recording/playback device 12 can be reduced than the case including two power supply circuits 22A and 22B.

In addition, in this embodiment, the recording/playback device 12 includes the HDD 27 including the hard disk 27B. However, the recording/playback device 12 may include not the HDD 27 but a drive into which a recording medium, such as Hi-MD (Hi-Mini-Disk), is loaded.

The data that is downloaded through the base station 11 is not limited to music data but may be data, such as moving pictures and still pictures, data such as numeral values, or a program.

Next, the above-described consecutive processing may be performed either by dedicated hardware or by software. When the above-described processing is performed by software, programs constituting the software are installed in a multipurpose computer or the like.

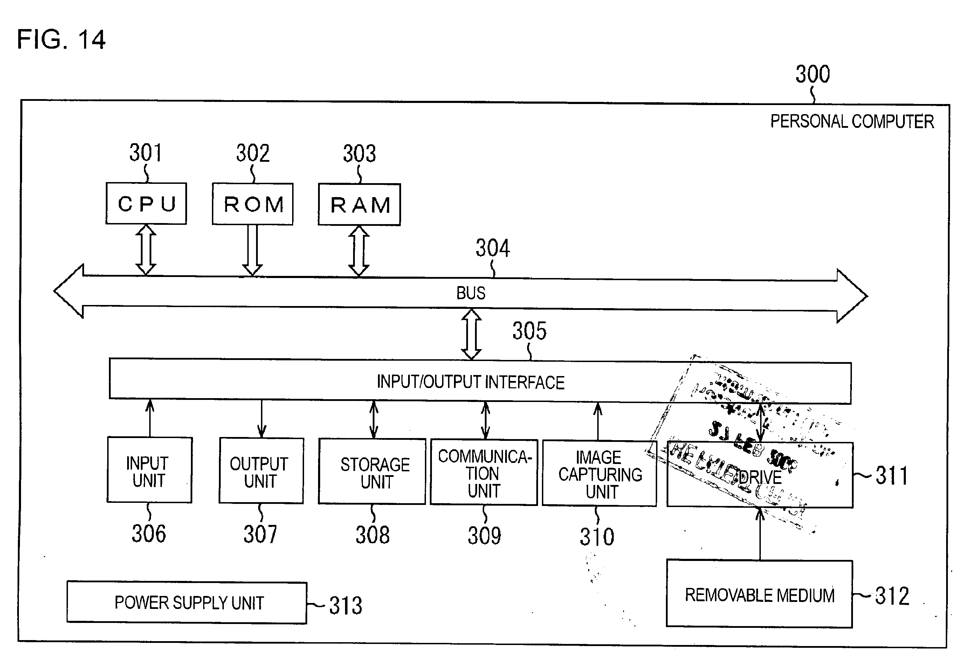

Accordingly, Fig. 14 shows an example of an embodiment of a computer into which a program for executing the above-described processing is installed.

The program can be recorded in a storage unit 308 and a ROM 302 as built-in recording media of the computer.

Alternatively, the program can temporally or eternally be stored (recorded) a removable medium 312 such as a flexible disk, a CD-ROM (compact disc read only memory), an MO (magneto-optical) disc, a magnetic disk, or a semiconductor memory. This removable medium 312 can be provided as so-called "package software".

In addition to installing the program from the removable medium 312 into the computer, the program may be installed into a built-in storage unit 308 by the computer after, from a download site, the program is wirelessly transferred to the computer through a digital broadcasting satellite or is transferred by wire to the computer through a network such as the Internet, and the transferred program is received by a communication unit 309.

The computer includes a CPU 301. The CPU 301 connects to the ROM 302 and the RAM 303. For example, the CPU 301, the ROM 302, and the RAM 303 are formed as microcomputers.

The CPU 301 also connects to an input/output interface 305 through a bus 304. When the CPU 301 receives a command in response to a user's operation on an input unit 306 including a keyboard, a mouse, and a microphone, the CPU 301 executes the program stored in the ROM 302. Alternatively, one of a program stored in the storage unit 308, the program installed in the storage unit 308 after being transferred from a satellite or a network and received by the communication unit 309, and the program installed in the storage unit 308 after being read from the removable medium 312 when it is loaded into a drive 311 is loaded in the RAM 303 and is executed by the CPU 301.

This allows the CPU 301 to perform processing in accordance with the above-described flowcharts or processing performed by configurations in the above-described block diagrams. Under the control of the CPU 301, for example, the result of processing is output from an output unit 307 including an LCD (liquid crystal display) and a speaker, is transmitted from the communication unit 309, or is stored in the storage unit 308, if needed, through the input/output interface 305. An image capturing unit 310 captures an image of a subject, and records the obtained image data in the storage unit 308. A power supply unit 313 is controlled by the CPU 301 to supply power to each portion.

In this specification, processing steps that constitute programs for allowing the computer to perform various types of processing do not necessarily need to be performed in given order as flowchart form, and include those (for example, parallel processing or object-based processing) executed in parallel or separately.

In addition, the programs may be performed by a single computer and may be performed in distributed form by a plurality of computers. Furthermore, the programs may be executed after being transferred to a remote computer.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An information processing device comprising:
recording/playback means which records data in a recording medium or plays back data from the recording medium;
communication means which performs communication with a different information processing device; and
control means in which, when the recording/playback means plays back the data, the control means allows supplying power to the recording/playback means and disallows supplying the power to the communication means, and in which, when the communication means performs the communication, the control means allows supplying the power to the communication means and disallows supplying the power to the recording/playback means.

2. The information processing device according to Claim 1, wherein:
the communication means receives data from the different information processing device; and
when the recording/playback means records the data received by the communication means in the recording medium, the control means allows supplying the power to the recording/playback means and disallows supplying the power to the communication means.

3. The information processing device according to Claim 1, further comprising a plurality of power supply means which perform power supplying,
wherein one of the plurality of power supply means supplies the power to the recording/playback means and the communication means.

4. The information processing device according to Claim 1, further comprising storage means which stores one of the data played back from the recording medium by the recording/playback means and the data that is recorded in the recording medium by the recording/playback means.

5. The information processing device according to Claim 4, wherein, while the data is being output from the storage means, when the amount of data stored in the storage means is equal to or less than a predetermined amount of data, the control means allows supplying the power to the recording/playback means and disallows supplying the power to the communication means.

6. The information processing device according to Claim 4, wherein, while the data is being output from the storage means, when the amount of data stored in the storage means is equal to or greater than a predetermined amount of data, the control means allows supplying the power to the communication means and disallows supplying the power to the recording/playback means.

7. The information processing device according to Claim 4, wherein, while the data is being output from the storage means, when the amount of data stored in the storage means is equal to or less than a first amount of data, the control means allows supplying the power to the recording/playback means and disallows supplying the power to the communication means, and, when the amount of data stored in the storage means is equal to or greater than a second amount of data, the control means allows supplying the power to the communication means and disallows supplying the power to the recording/playback means.

8. The information processing device according to Claim 1, further comprising communication control means in which, when the control means disallows supplying the power to the communication means, the communication control means stores an interruption position at which data communication is interrupted, and, when the control means allows supplying the power to the communication means, the communication control means restarts the data communication at the interruption position.

9. An information processing device comprising:
recording/playback means which records data in a recording medium or plays back data from the recording medium;
storage means which stores one of the data played back from the recording medium by the recording/playback means and the data that is recorded in the recording medium by the recording/playback means;
communication means which performs communication with a different information processing device; and
control means in which, in the case of recording data received by the communication means in the recording medium via the storage means, when the storage means has less free space, the control means allows supplying the power to the recording/playback means and disallows supplying the power to the communication means, and, when the amount of the data stored in the storage means decreases, the control means allows supplying the power to the communication means and disallows supplying the power to the recording/playback means.

10. An information processing method for an information processing device including recording/playback means which performs recording or playing back data in a recording medium, and communication means which performs communication, the information processing method comprising the steps of:
commanding the recording/playback means to perform data playback;
allowing supplying power to the recording/playback means and disallowing supplying the power to the communication means;
commanding the communication means to perform data communication; and
allowing supplying the power to the communication means and disallowing supplying the power to the recording/playback means.

11. An information processing method for an information processing device including recording/playback means which performs one of recording data in a recording medium and playing back data from the recording medium, storage means which stores one of the data played back from the recording medium by the recording/playback means and the data that is recorded in the recording medium by the recording/playback means, and communication means which performs communication, the information processing method comprising the steps of:
by the communication means, receiving data;
storing the data received by the communication means in the storage means;
when the storage means has less free space, allowing supplying power to the recording/playback means and disallowing the power to the communication means; and
when the amount of the received data stored in the storage means decreases, allowing supplying the power to the communication means and disallowing supplying the power to the recording/playback means.

12. An information processing device comprising:
a recording/playback section recording data in a recording medium or playing back data from the recording medium;
a communication section performing communication with a different information processing device; and
a control section allowing supplying power to the recording/playback section and disallowing supplying the power to the communication section when the recording/playback section plays back the data, the control section allowing supplying the power to the communication section and disallowing supplying the power to the recording/playback section when the communication section performs the communication.

13. An information processing device comprising:
a recording/playback section recording data in a recording medium or playing back data from the recording medium;
a storage section storing one of the data played back from the recording medium by the recording/playback section and the data that is recorded in the recording medium by the recording/playback section;
a communication section performing communication with a different information processing device; and
a control section performing, in the case of recording data received by the communication section in the recording medium via the storage means, allowing supplying the power to the recording/playback section and disallowing supplying the power to the communication section when the storage section has less free space, and allowing supplying the power to the communication section and disallowing supplying the power to the recording/playback section when the amount of the data stored in the storage section decreases.
